# EUROPEAN PATENT SPECIFICATION

(11) **EP 4 058 953 B1**
(45) Date of publication and mention of the grant of the patent: **14.02.2024**
(21) Application number: 20821067.4
(22) Date of filing: 16.11.2020
(51) Int. Cl.: G06Q 10/04, G06Q 10/06, G06Q 10/08, G06Q 50/26

(54) **SYSTEM FOR SIGNALLING THE SPACE AVAILABLE IN A PLACE FOR THE STOPPING OR TRANSIT OF PEOPLE**
SYSTEM ZUR SIGNALISIERUNG DES ZUR VERFÜGUNG STEHENDEN RAUMES ZUM ANHALTEN ODER TRANSIT VON PERSONEN
SYSTÈME DE SIGNALISATION DE L'ESPACE DISPONIBLE EN PLACE POUR L'ARRÊT OU LE TRANSIT DE PERSONNES

(30) Priority: 15.11.2019 IT 201900021276
(43) Date of publication of application: 21.09.2022
(73) Proprietor: ITALDESIGN-GIUGIARO S.p.A, 10121 Torino (IT)
(72) Inventor: MARTINOTTI, Massimo, 10024 Moncalieri (Torino) (IT); RESCE, Pierpaolo, 82110 Germering (DE)
(74) Representative: Deambrogi, Edgardo
(86) International application number: PCT/IB2020/060740
(87) International publication number: WO 2021/095019

(56) References cited:
- EP-A1- 1 943 628
- EP-A1- 2 270 761
- EP-B1- 1 943 628
- WO-A2-2006/012645
- US-A1- 2006 028 552

## Description

This invention relates to systems for signalling the space available to people in stopping or transit places, and more specifically a system for signalling the space available in a place for people to stop or transit in a predetermined territory according to the preamble of claim 1.

Places where people stop or transit may be private or public places, enclosed places, such as large buildings like airports or shopping centers, or open places, such as squares or entire city districts.

Generally, a place for people to stop or transit is designed or equipped to accommodate a predetermined number of people. In such a place there may be a predetermined number of seats and a predetermined amount of free space for people on foot to stop or transit. In this description, "free space" is intended to mean a predetermined space according to a predefined criterion, considered suitable for accommodating a standing person, according to the average size of a person and the optimal distance between people.

It is not uncommon that in a place where people stop or transit, such as a public building or a city space, there are people meeting areas that tend to be more crowded (usually near the entrances to the place or near a center of attraction), where free spaces are not available to accommodate people safely, i.e. in such a way as to ensure the possibility of evacuating the place without obstacles in case of need or emergency, and areas that are less crowded, where the free space to accommodate people is greater.

It would be desirable for people who go to a stopping place, for example the place where an event is held, or who pass through a transit place to have direct access to an uncrowded area of the place or an area where more space is available for stopping or transit than in other occupied areas. Often, however, reaching an area with available space may not be possible after entering a crowded area, if the areas are not intercommunicating, or may be very difficult, if crowded areas must be crossed.

A system for signalling the space available in a place for people to stop or transit based solely on the knowledge of the number of people in the different meeting areas of the place associated with the access gates to the place does not, however, meet the requirements for accurately predicting the space available based on the flow of people entering/exiting over time. WO 2006/012645 A2 relates to associating and maintaining identities over an extended period of time and providing total situational awareness and monitoring capabilities. EP 1 943 626 A1 relates to apparatus has an infrared (IR) camera operable to produce video images in the form of pixelated two-dimensional images, where the camera is mounted on the front of a vehicle. US 2006/02855 A1 relates to method and apparatus for stereo, multi-camera tracking and RF and video track fusion. EP 2 270 761 A1 relates to a system architecture and process for tracking individuals in large crowded environment.

This invention therefore has the object of implementing a system for determining and signalling the space available in a place for people to stop or transit that is as accurate as possible and integrates functions for monitoring and predicting the number of people in such a place.

According to this invention, this object is achieved by a system for signalling the space available in a place for people to stop or transit which has the features referred to in claim 1.

Particular embodiments form the subject matter of the dependent claims, the content of which is to be understood as an integral part of this description.

In summary, this invention is based on the principle of implementing a system for determining and signalling the space available in a place for people to stop or transit according to the estimate of the entrance and exit flow of people, said estimate being based on detecting the number of people present in the various meeting areas into which a stopping or transit place may be divided and on detecting the number of people present in waiting areas to the stopping or transit place or in outflow areas from the stopping or transit place, as well as on a data history including data on the number of people in the aforesaid meeting areas of the stopping or transit place and crowding data for the aforesaid waiting and/or outflow areas, in a plurality of predetermined corresponding or correlated monitoring times, for example at the same time of day or on the occasion of a same event or condition, for example a weather condition.

The data history is constantly updated according to a predetermined interval for monitoring time and is used to train machine learning means provided for estimating the entrance and exit flow of people to/from the place.

Further features and advantages of this invention will become clear from the detailed description that follows, given purely by way of non-limiting example and with reference to the accompanying drawings, wherein:
Fig. 1 schematically shows a place for people to stop or transit, such as a city square;
Fig. 2 is an illustrative block diagram of an available space signalling system that is the subject of the invention; and
Fig. 3 is a block diagram representative of an embodiment of the programming structure of the signalling system that is the subject of the invention.

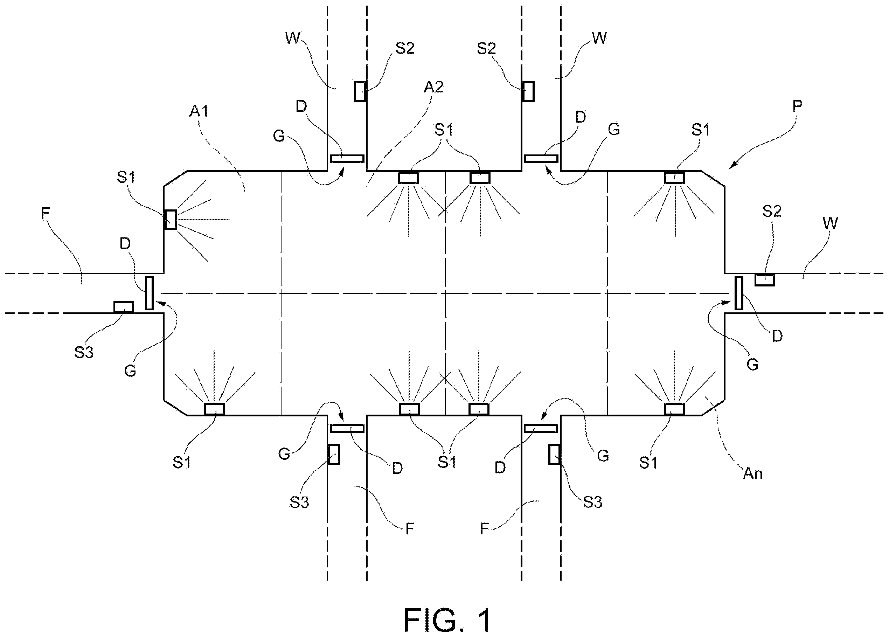

Fig. 1 shows in a purely schematic way a system that is the subject of the invention for signalling the space available to people in a stopping or transit place.

A stopping or transit place includes a plurality of predetermined people meeting areas, associated with relevant access gates. The figure shows a place P such as a city square, which has a plurality of people meeting areas, marked Al, ..., An, accessible from the outside through corresponding gates G and communicating with each other. In general, the people meeting areas may include seats and/or a predetermined free space for people on foot to stop or pass through. The following description is to be understood as purely illustrative and the place for stopping or transit may also be a building, a building area, such as an extended territory including within its boundaries a plurality of separate buildings, or a means of transport.

Each stopping or transit place in a predetermined territory is arranged to accommodate people stopping therein or passing therethrough, and Fig. 1 shows adjacent waiting areas W and adjacent outflow areas F belonging to a space outside the concerned stopping or transit place. The waiting and outflow areas may be coinciding spaces, i.e., they may be structured for both purposes, or they may be controlled - through the supervision of operators or automatically through physical barriers - to be used selectively and alternately as waiting areas or as outflow areas, as shown in Fig. 1.

In the stopping or transit place P, first sensor means S1 are installed adapted to detect in real time the number of people in each of said plurality of meeting areas Al, ..., An, said first sensor means being adapted to emit respective signals or data representing the space occupation in each of said plurality of meeting areas, based on the number of people detected.

Said sensor means S1 comprise, for example, means for filming the stopping or transit place to monitor the occupation and use of the space in the aforesaid place, such as a plurality of video cameras, for example surveillance cameras, preferably one for each meeting area, adapted to film a scene in the associated meeting area, from which an image recognition system, integrated or external, is able to determine the number of people in the scene.

Second sensor means S2 are installed outside the stopping or transit area P at a plurality of predetermined adjacent waiting areas W, which are adapted to detect in real time the number of people in each of said waiting areas and emit respective crowding signals or data for the waiting area according to the number of people detected. The crowding signals or data are indicative of the number of people waiting to access the stopping or transit place and may be indicative of the outflow from the stopping or transit area.

The sensor means S2 also comprise, for example, filming means provided to monitor the occupation and use of the space in the waiting area, such as a plurality of video cameras, for example surveillance cameras, preferably one for each predetermined waiting area, adapted to film a scene in the waiting area, from which an integrated or external image recognition system is able to determine the number of people in the scene.

In the outflow areas F from the stopping or transit place, sensor means S3 are also installed, for example along the mandatory outflow paths, adapted to detect in real time the number of people and the direction of the flow in each of said outflow areas and emit relevant signals or transit data according to the number of people detected. In the same way as the sensor means S 1 and S2, the sensor means S3 may also be implemented advantageously as filming means.

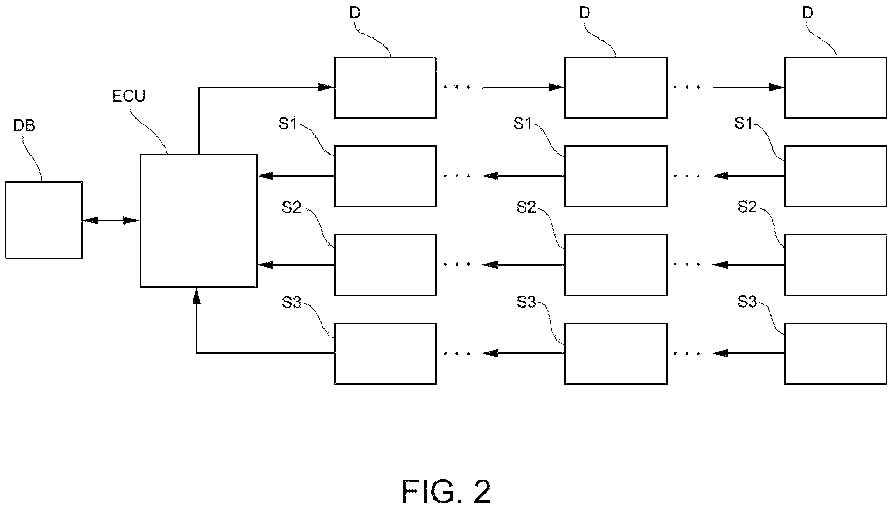

With reference to the block diagram in Fig. 2, the system further comprises processing means ECU, which include, for example, a network of processors distributed at the stopping or transit places and at least one central control unit-connected via cable or radio-configured to estimate the space available to people in a stopping or transit location through machine learning algorithms and advanced statistical models. The processing means ECU are adapted to receive occupation signals for the space in the meeting areas Al, ..., An from the first sensor means S1 and crowding signals for the waiting areas W adjacent to the stopping or transit area P from the second sensor means S2. The processing means are distributed in all the stopping or transit places and connected to each other in a network to transmit the detected signals, or the results of the processing, to adjacent monitored stopping or transit places.

Advantageously, the estimation of the space available to people in a stopping or transit place is carried out with a predetermined periodicity over time, so as to provide as current a signal as possible to the people.

A learning database DB is coupled to the processing means ECU, and is adapted to store a data history including data on the number of people in the meeting areas Al, ..., An and crowding data for the waiting and/or outflow areas.

The processing means ECU are arranged to estimate an exit and entrance flow of persons relative to each meeting area as a function of the space occupation signals, the crowding signals and the data history in a corresponding or correlated monitoring time, and to emit signals or data indicative of an estimated space available to people as a function of said estimated exit flow and entrance flow. A corresponding monitoring time includes, for example, a corresponding monitoring time on another day of the week or a corresponding monitoring time in another week or the circumstance of a same event.

The processing means ECU are configured to estimate the flow of people entering the stopping or transit place as a function of the crowding data of the waiting areas W, and to estimate the flow of people exiting the stopping or transit place as a function of crowding data of the outflow areas F.

The processing means are further configured to estimate the flow of people exiting the stopping or transit place as a function of the history data referring to a predetermined number of previous monitoring times.

Advantageously, data may be stored in the learning database DB which may be correlated with the crowding of the stopping or transit place and correlated to the movement from one stopping or transit place to another, not only monitoring times and/or events, but also variations in the walkable area available in the meeting areas, weather conditions and in general data that may be correlated to the level of occupation of the stopping or transit place.

The signals or data indicative of the estimated space available for people in the meeting areas of the stopping or transit place are used by means D for displaying the availability of space for people in order to provide a signal of availability or unavailability of free space for people in each of the meeting areas of the stopping or transit area, for example by means of light sources located at the location of the access gates G to the stopping or transit area, at least preferably the access gates from waiting areas W.

Expediently, in a currently preferred embodiment, the signals or data indicative of an estimated space available for people are processed to represent three conditions of occupation: a first condition wherein the relevant people meeting area is free or sparsely crowded (whereby the light sources of the display means light up green), a second condition wherein the relevant people meeting area is partially occupied (whereby the light sources of the display means light up yellow or orange) and a third condition wherein the relevant people meeting area is entirely or almost entirely occupied (whereby the light sources of the display means light up red), respectively.

Advantageously, the processing means also provide means for updating the learning database DB, since they are arranged to store in the database the current data on the number of people or the occupation of space for people in the meeting areas and the crowding data of the adjacent waiting and/or outflow areas at the monitoring times of the stopping or transit area.

In one embodiment, the number of people is detected at the access gates to the stopping or transit place, and it is also possible that the estimate of the occupation status of the space for people is carried out by attributing different weights to the number of people who are standing in front of the access gates relative to the number of people who are standing away from the gates.

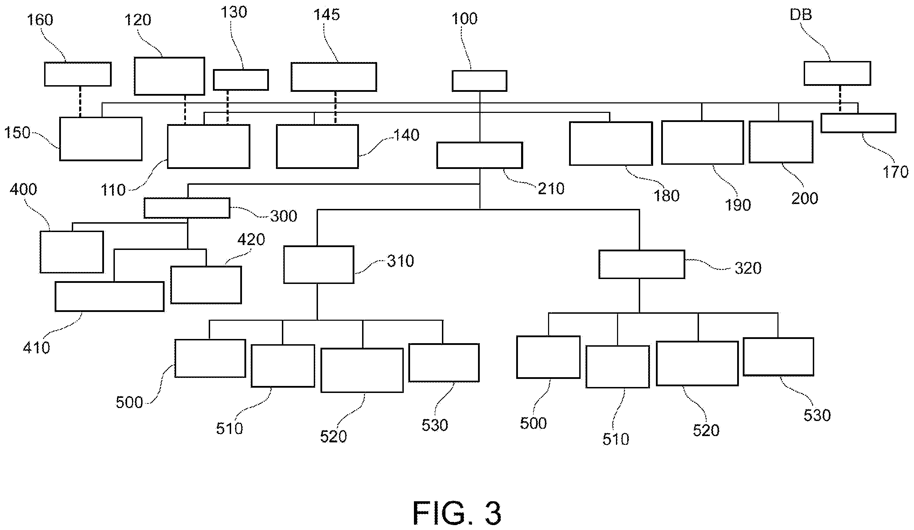

Fig. 3 shows a block diagram of an embodiment of the programming structure of the signalling system that is the subject of the invention, having a modular architecture.

The main module of the signalling system carried out by the processing means ECU located in the central unit is indicated with 100. A set of configuration files are provided as input to the main module 100. They contain all the information required to activate the sensor means S 1, S2, S3 and in general to interact with the external environment. The configuration files also contain a schematic representation of the assembly of stopping or transit places to be monitored, for example a list of places, their geographical location, the location of the sensor means S2, S3 within each waiting or outflow area and the list of monitored waiting and/or outflow areas.

Once the main module 100 has been initialized, it generates a plurality of predetermined dependent software modules which are required for the system according to the invention to operate, i.e. it starts a series of processes and services, including:
- a communication services module 110 adapted to receive signals or data from the sensor means S1, S2, S3 indicated collectively in the figure with 120, and from any other sensors (for example, laser scanning sensors, weight sensors on walkable platforms, etc.), indicated collectively in the figure with 130;
- a metadata generator module 140 adapted to access services and APIs 145 of external infrastructures;
- an external element control module 150 adapted to be connected through a radiocommunication system to controlled external elements 160, such as for example the means D for displaying the stopping or transit places;
- a database management module 170 adapted to be connected to the learning database DB;
- a plurality of predictor modules, based on machine learning statistical analysis algorithms, including a module for predicting the behavior of people 180 in predetermined monitoring times or on the occasion of monitoring events or conditions, a module for predicting the occupation status of a stopping or transit place 190 and a module 200 for predicting the crowding of the waiting and/or outflow areas;
- a supervisor module 210.

When all the previous software modules have been created, the main module 100 switches to stand-by and waits for specific events to occur, for example commands from external systems, such as deactivation, reset and checking of display devices.

The supervisor module 210 creates virtual elements that are copies corresponding to the real elements of the assembly of stopping or transit places, enriched with data processing functions, i.e. it generates a series of processes that are used to monitor a specific real element of the system. In the example in Fig. 3, the supervisor module 210 is associated with a location module 300, which generates a virtual element of a place, a waiting area module 310, which generates a virtual element of a waiting area, and an outflow area module 320, which generates a virtual element of an outflow area. The supervisor module 210 keeps track over time of the events of interest that occur and concern the virtual elements generated.

Respective operating modules are associated with the location module 300, for example an operating module 400 representing the sensor means S 1, an operating module 410 for determining the degree of crowding, and an operating module 420 for estimating the occupation of the stopping or transit place starting from the determined degree of crowding.

The waiting area module 310 and the outflow area module 320 are associated with respective operating modules, for example an object detector operating module 500 adapted to detect, for example, anomalous unattended objects, an operating module 510 representing the sensor means S2 and S3 respectively, an operating module 520 for detecting events and the behavior of people (for example, the number of exits from the stopping or transit area and the passages through the outflow areas in the different monitoring times), and an operating module 530 for determining the degree of crowding of the waiting area and of the outflow area, respectively.

Some of the modules described may interact with each other to exchange commands and/or information with the external environment; for example, a place module 300 may make use of the control module of the external elements 150 to command controlled elements 160, for example, to switch the light sources of the signalling means on and off.

In the event that the filming means representing the sensors S1 of the stopping or transit places and the sensors S2 of the waiting areas (or the sensors S3 of the outflow areas) are not usable, the system is able to operate autonomously using machine learning models to estimate the occupation of the stopping or transit place or the level of crowding of the adjacent waiting area on the basis of history data, thus using the predictor modules 180, 190, 200.

The communication services module 110 and the metadata generator module 140 are provided to communicate with the sensor means S1, S2, S3, the web services and the API of the infrastructures 145 and in general with all the external services to receive in real time all the data necessary for the operation of the system, for example, the video streams from the video cameras that make up the sensor means S1, S2.

The database manager module 170 represents the interface of the processing means ECU with the database DB for acquiring the stored history data and for storing new history data.

Advantageously, due to the system of this invention, people directed to a stopping or transit place, for example an urban public place, waiting to access it in an adjacent waiting area may arrange themselves at the access gates to the place following the visual signals of the level of occupation of the meeting areas of the place in such a way as to arrange themselves at the access gates that are associated with the meeting areas that are less crowded.

## Claims

1. System for determining and signalling the space available in a place (P) for the stopping or transit of people in a predetermined territory, said place (P) for stopping or transit including a plurality of predetermined people meeting areas (A1, ..., An) associated with respective access gates (G) from external areas, the meeting areas (A1, ..., An) being adapted to accommodate a multitude of people and flows of people moving between adjacent meeting areas,
the system being **characterized in that** it comprises:
- first sensor means (S1) installed at each stopping or transit place (P) adapted to detect in real time the number of people in each of said plurality of meeting areas (A1, ..., An), said first sensor means (S1) being adapted to issue respective space occupation signals or data for each of said plurality of meeting areas (A1, ..., An), as a function of the number of people detected;
- second sensor means (S2) installed at a plurality of predetermined waiting areas (W) adjacent to said stopping or transit place (P) and/or third sensor means (S3) installed at a plurality of predetermined outflow areas (F) adjacent to said stopping or transit place (P) adapted to detect in real time the number of people in each of said waiting and/or outflow areas, said second and/or third sensor means (S2, S3) being adapted to issue respective crowding signals or data for a corresponding waiting and/or outflow area according to the number of people detected;
- a learning database (DB), adapted to store a data history including data on the number of people in said predetermined meeting areas (A1, ..., An) and crowding data for said predetermined waiting and/or outflow areas (W, F), in a plurality of predetermined monitoring times;
- processing means (ECU) configured to estimate the space available to people in a predetermined stopping or transit place (P), arranged to receive from said first sensor means (S1) said space occupation signals or data in said meeting areas (A1, ..., An) of said stopping or transit place (P), and from said second and/or third sensor means (S2, S3) said crowding signals or data for the waiting and/or outflow areas (W, F) for the entrance to, or the exit from, said stopping or transit place (P), said processing means (ECU) being arranged to estimate an exit flow and an entrance flow of people relative to each of said meeting areas (A1, ..., An) as a function of said space occupation signals or data, of said crowding signals or data and of said history data in a corresponding or correlated monitoring time, and to emit signals or data indicative of an estimated space available to people based on said estimated exit flow and entrance flow;
- means (D) for displaying the availability of space for people in a stopping or transit place (P), arranged to receive from said processing means (ECU) said signals or data indicative of the estimated space available to people and to provide a signalling of availability of space for people or a signalling of unavailability of space for people at each of said meeting areas (A1, ..., An); and
- means for updating the learning database (DB), coupled to said first sensor means (S1) and to said second sensor means (S2) and/or third sensor means (S3) and arranged to store in the database the data of the number of people in the meeting areas (A1, ..., An) of the stopping or transit place (P) detected by said first sensor means (S1), and the crowding data for the waiting and/or outflow areas (W, F) emitted by said second and/or third sensor means (S2, S3), in the monitoring time of the stopping or transit place.

2. System according to claim 1, wherein said first, second and third sensor means (S1, S2, S3) include surveillance cameras adapted to detect the number of people at the access gates (G).

3. System according to any one of the preceding claims, wherein said processing means (ECU) are configured to estimate the entrance flow of people to a stopping or transit place (P) according to the crowding data for the waiting areas (W), and to estimate the exit flow of people from a stopping or transit place (P) according to the crowding data for the outflow areas (F).

4. System according to claim 3, wherein the outflow areas (F) from the stopping or transit place (P) include the exit paths associated with said access gates (G).

5. System according to any one of the preceding claims, wherein said processing means (ECU) are configured to estimate the exit flow of people from a stopping or transit place (P) according to the history data referring to a predetermined number of previous monitoring times.

## Patentansprüche

1. System zur Bestimmung und Signalisierung des an einem Ort (P) für Aufenthalt oder Transit von Personen in einem vorbestimmten Gebiet verfügbaren Raums, wobei der Ort (P) für Aufenthalt oder Transit mehrere vorbestimmte Personenbegegnungsbereiche (A1,..., An) umfasst, die jeweiligen Zugangstoren (G) von Außenbereichen aus zugeordnet sind, wobei die Begegnungsbereiche (A1, ..., An) geeignet sind, eine Vielzahl von Personen und Bewegungsströmen von Personen zwischen benachbarten Bereichen aufzunehmen,
wobei das System **dadurch gekennzeichnet ist, dass** es Folgendes umfasst:
- erste Sensormittel (S1), die an jedem Aufenthalts- oder Transit-Ort (P) installiert sind, um in Echtzeit die Anzahl von Personen in jedem der mehreren Begegnungsbereiche (A1, ..., An) zu erfassen, wobei die ersten Sensormittel (S1) geeignet sind, jeweilige Raumbelegungssignale oder -daten für jeden der mehreren Begegnungsbereiche (A1, ..., An) als eine Funktion der Anzahl der erfassten Personen auszugeben;
- zweite Sensormittel (S2), die an mehreren vorbestimmten Wartebereichen (W) in der Nähe des Aufenthalts- oder Transit-Ortes (P) installiert sind, und/oder dritte Sensormittel (S3), die an mehreren vorbestimmten Abgangsbereichen (F) in der Nähe des Aufenthalts- oder Transit-Ortes (P) installiert sind, um in Echtzeit die Anzahl von Personen in jedem der Warte- und/oder Abgangsbereiche zu erfassen, wobei die zweiten und dritten Sensormittel (S2, S3) geeignet sind, jeweilige Überfüllungssignale oder -daten für einen entsprechenden Warte- und/oder Abgangsbereich in Übereinstimmung mit der Anzahl von erfassten Personen auszugeben;
- eine Lerndatenbank (DB), die geeignet ist, einen Datenverlauf zu speichern, der Daten über die Anzahl von Personen in den vorbestimmten Begegnungsbereichen (A1, ..., An) und Überfüllungsdaten für die vorbestimmten Warte- und/oder Abgangsbereiche (W, F) in mehreren vorbestimmten Überwachungszeiten enthält;
- eine Verarbeitungseinrichtung (ECU), die dafür konfiguriert ist, den an einem vorbestimmten Aufenthalts- oder Transit-Ort (P) für Personen verfügbaren Raum zu schätzen, und die dafür eingerichtet ist, von den ersten Sensormitteln (S1) die Raumbelegungssignale oder -daten in den Begegnungsbereichen (A1, ....., An) des Aufenthalts- oder Transit-Ortes (P) und von den zweiten und dritten Sensormitteln (S2, S3) die Überfüllungssignale oder -daten für die Warte- und/oder Abgangsbereiche (W, F) für den Zugang zu oder den Austritt von dem Aufenthalts- oder Transit-Ort (P) zu empfangen, wobei die Verarbeitungseinrichtung (ECU) dafür eingerichtet ist, einen Austrittsstrom und einen Eintrittsstrom von Personen relativ zu jedem der Begegnungsbereiche (A1, ..., An) als eine Funktion der Raumbelegungssignale, der Überfüllungssignale und der Verlaufsdaten in einer entsprechenden oder korrelierten Überwachungszeit zu schätzen und Signale oder Daten auszugeben, die einen geschätzten für Personen verfügbaren Raum auf Basis der geschätzten Austritts- und Zutrittsströme anzeigen;
- Mittel (D) zum Anzeigen der Verfügbarkeit von Raum für Personen an einem Aufenthalts- oder Transit-Ort (P), die dafür eingerichtet sind, von der Verarbeitungseinrichtung (ECU), die Signale oder Daten zu empfangen, die den geschätzten für Personen verfügbaren Raum anzeigen, und eine Signalisierung der Verfügbarkeit von Raum für Personen oder eine Signalisierung der Nichtverfügbarkeit von Raum für Personen in jedem der Begegnungsbereiche (A1, ..., An) zu liefern; und
- Mittel zum Aktualisieren der Lerndatenbank (DB), die mit den ersten Sensormitteln (S1) und den zweiten Sensormitteln (S2) und/oder den dritten Sensormitteln (S3) gekoppelt und dafür eingerichtet sind, die Daten über die Anzahl von Personen in den Begegnungsbereichen (A1, ..., An) des Aufenthalts- oder Transit-Ortes (P), die von den ersten Sensormitteln (S1) erfasst werden, und die Überfüllungsdaten für die Warte- und/oder Abgangsbereiche (W, F), die von den zweiten und/oder dritten Sensormitteln (S2, S3) ausgegeben werden, in der Überwachungszeit des Aufenthaltsoder Transit-Ortes in der Datenbank zu speichern.

2. System nach Anspruch 1, wobei die ersten, zweiten und dritten Sensormittel (S1, S2, S3) Überwachungskameras umfassen, die geeignet sind, die Anzahl von Personen an den Zugangstoren (G) zu erfassen.

3. System nach einem der vorhergehenden Ansprüche, wobei die Verarbeitungseinrichtung (ECU) dafür konfiguriert ist, den Eintrittsstrom von Personen zu einem Aufenthalts- oder Transit-Ort (P) in Übereinstimmung mit den Überfüllungsdaten für die Wartebereiche (W) zu schätzen und den Austrittsstrom von Personen von einem Aufenthalts- oder Transit-Ort (P) in Übereinstimmung mit den Überfüllungsdaten für die Abgangsbereiche (F) zu schätzen.

4. System nach Anspruch 3, bei dem die Abgangsbereiche (F) von dem Aufenthalts- oder Transit-Ort (P) die den Zugangstoren (G) zugeordneten Austrittswege umfassen.

5. System nach einem der vorhergehenden Ansprüche, wobei die Verarbeitungseinrichtung (ECU) so konfiguriert ist, dass sie den Austrittsstrom von Personen von einem Aufenthalts- oder Transit-Ort (P) in Übereinstimmung mit den Verlaufsdaten schätzt, die sich auf eine vorbestimmte Anzahl von vorherigen Überwachungszeiten beziehen.

## Revendications

1. Système de détermination et de signalisation de l'espace disponible dans un lieu (P) d'arrêt ou de transit de personnes dans un territoire prédéterminé, ledit lieu (P) d'arrêt ou de transit comportant une pluralité de zones de rencontre (A1, ..., An) de personnes prédéterminées associées à des portes d'accès respectives (G) depuis les zones externes, les zones de rencontre (A1, ..., An) étant adaptées pour accueillir une multitude de personnes et de flux de personnes se déplaçant entre des zones de rencontre adjacentes,
le système étant **caractérisé en ce qu'**il comprend :
- des premiers moyens capteurs (S1) installés à chaque lieu (P) d'arrêt ou de transit adaptés pour détecter en temps réel le nombre de personnes dans chacune de ladite pluralité de zone de rencontre (A1, ..., An), lesdits premiers moyens capteurs (S1) étant adaptés pour émettre des signaux ou des données d'occupation d'espace respectivement pour chacune de ladite pluralité de zones de rencontre (A1, ..., An), en fonction du nombre de personnes détectées ;
- des deuxièmes moyens capteurs (S2) installés au niveau d'une pluralité de zones d'attente prédéterminées (W) adjacentes audit lieu (P) d'arrêt ou de transit et/ou des troisièmes moyens capteurs (S3) installés au niveau d'une pluralité de zones de passage prédéterminées (F) adjacentes audit lieu (P) d'arrêt ou de transit adaptés pour détecter en temps réel le nombre de personnes dans chacune desdites zones d'attente et/ou de passage, lesdits deuxième et/ou troisième moyens capteurs (S2, S3) étant adaptés pour émettre des signaux ou des données d'encombrement respectifs pour une zone d'attente et/ou de fuite correspondante en fonction du nombre de personnes détectées ;
- une base de données d'apprentissage (DB), adaptée pour stocker un historique de données comportant des données sur le nombre de personnes dans lesdites zones de rencontre (A1, ..., An) prédéterminées et des données d'encombrement pour lesdites zones d'attente et/ou de passage (W, F) prédéterminées, dans une pluralité de temps de surveillance prédéterminés ;
- des moyens de traitement (ECU) configurés pour estimer l'espace disponible pour les personnes dans un lieu (P) d'arrêt ou de transit prédéterminé, agencé pour recevoir desdits premiers moyens capteurs (S1) lesdits signaux ou lesdites données d'occupation d'espace dans lesdites zones de rencontre (A1, ..., An) dudit lieu (P) d'arrêt ou de transit, et desdits deuxièmes et/ou troisièmes moyens capteurs (S2, S3), lesdits signaux ou lesdites données d'encombrement pour les zones d'attente et/ou de passage (W, F) pour l'entrée ou la sortie dudit lieu (P) d'arrêt ou de transit, lesdits moyens de traitement (ECU) étant agencés pour estimer un flux de sortie et un flux d'entrée de personnes par rapport à chacune desdites zones de rencontre (A1, ..., An) en fonction desdits signaux ou desdites données d'occupation d'espace, desdits signaux ou desdites données d'encombrement et desdites données d'historique dans un temps de surveillance correspondant ou corrélé, et émettre des signaux ou données indiquant un espace estimé disponible pour les personnes sur la base dudit flux de sortie et flux d'entrée ;
- des moyens (D) pour afficher la disponibilité d'espace pour des personnes dans un lieu (P) d'arrêt ou de transit, agencés pour recevoir desdits moyens de traitement (ECU) lesdits signaux ou lesdites données indiquant l'espace estimé disponible pour les personnes et pour fournir une signalisation de disponibilité d'espace pour des personnes ou une signalisation d'indisponibilité d'espace pour des personnes au niveau de chacune desdites zones de rencontre (A1, ..., An) ; et
- des moyens de mise à jour de la base de données d'apprentissage (DB), couplés auxdits premiers moyens capteurs (S1) et auxdits deuxièmes moyens capteurs (S2) et/ou troisièmes moyens capteurs (S3) et agencés pour stocker dans la base de données les données du nombre de personnes dans les zones de rencontre (A1, ..., An) du lieu (P) d'arrêt ou de transit détecté par lesdits premiers moyens capteurs (S1), et les données d'encombrement pour des zones d'attente et/ou de passage (W, F) émises par lesdits deuxièmes et/ou troisièmes moyens capteurs (S2, S3), pendant le temps de surveillance du lieu d'arrêt ou de transit.

2. Système selon la revendication 1, dans lequel lesdits premiers, deuxièmes et troisièmes moyens capteurs (S1, S2, S3) comportent des caméras de surveillance adaptées pour détecter le nombre de personnes au niveau des portes d'accès (G).

3. Système selon l'une quelconque des revendications précédentes, dans lequel lesdits moyens de traitement (ECU) sont configurés pour estimer le flux de personnes entrant dans un lieu (P) d'arrêt ou de transit en fonction des données d'encombrement pour les zones d'attente (W), et estimer le flux de sortie de personnes d'un lieu (P) d'arrêt ou de transit en fonction des données d'encombrement pour les zones de passage (F).

4. Système selon la revendication 3, dans lequel les zones de passage (F) du lieu (P) d'arrêt ou de transit comportent les voies de sortie associées auxdites portes d'accès (G).

5. Système selon l'une quelconque des revendications précédentes, dans lequel lesdits moyens de traitement (ECU) sont configurés pour estimer le flux de sortie de personnes d'un lieu (P) d'arrêt ou de transit en fonction des données d'historique se référant à un nombre prédéterminé de temps de surveillance précédents.
